# EUROPEAN PATENT SPECIFICATION

(11) **EP 1 389 594 B1**
(45) Date of publication and mention of the grant of the patent: **01.03.2006**
(21) Application number: 03396070.9
(22) Date of filing: 09.07.2003
(51) Int. Cl.: B65G 47/252, B27B 31/04

(54) **Device for overturning sawn timber**
Einrichtung zur Wendung von Schnittholz
Dispositif pour retourner du bois de sciage

(30) Priority: 14.08.2002 FI 20021474
(43) Date of publication of application: 18.02.2004
(73) Proprietor: Oy Foudila Ab, 64260 Kaskinen (FI)
(72) Inventor: Foudila, Ilkka, 64260 Kaskinen (FI); Luhtala, Erkki, 64700 Teuva (FI)
(74) Representative: Pelin, Torolf Johannes

(56) References cited:
- DE-A- 4 314 644
- GB-A- 2 229 986
- US-A- 3 426 882

## Description

The invention relates to a mechanism for overturning sawn timber through 180° about its longitudinal axis.

There is a need in sawmills for a device used for overturning pieces of sawn timber to a desired position, for example for subsequent quality classification. In addition, by incorporating a number of turning or flip-over devices in a line, it is possible to employ two inspection stations for checking both sides of a piece of sawn timber, as well as for setting all pieces of sawn timber the same way for further processing. The fact that all pieces of sawn timber face the same way is particularly beneficial in the process of advancing pieces of sawn timber to a plane for further processing. In finger-jointing lines, the pieces of sawn timber are also tipped over to obtain a specific sequence according to annual rings. The overturning is determined either by reading annual rings with a camera or by a laser measurement for the convexity or concavity of a piece.

Previously disclosed and prior art describing flip-over devices for pieces of timber are known e.g. from publications DE 43 14 644 A, FI 99009, US 4,484,675 and FI 56658.

Publication DE 43 14 644 A describes a device which turns slim objects 90 degrees from long side to the short side using two conveyors. The turning element of the first conveyer has two sides at 90 degrees angle to hold and turn the objects.

Publication FI 99009 describes a device, wherein a turning member overturns a piece of timber coming from a first conveyor while passing the piece of timber onto a second conveyor. The turning member is located between the substantially coplanar conveyors and has the shape of a sort of star wheel. As it rotates, the star wheel turns or flips a piece of timber over or, optionally, in case the overturning of a piece of timber is not necessary/desirable, the device is provided with a pickup element whose function denies a flip-over of the piece, while the star wheel carries it from one conveyor onto another.

Publication US 4,484,675 discloses a device intended for overturning saw timber, wherein the saw timber being conveyed is stopped at the turning device by means of a claw type member and turned over by lifting it at its leading edge by means of a long finger type element in such a way that the piece flips and falls over its trailing edge. The overturning incident occurs in a coplanar mode on top of the conveyor and the advancement of timber along the line for further processing is substantially hampered by the overturning process.

Publication FI 56658 discloses an apparatus, wherein the overturning of a piece of sawn timber is implemented by having a conveyor provided with a separate device, which lifts the piece of sawn timber up from the conveyor's transfer top and overturns the same through 180° about its longitudinal axis. As a method, its idea is highly similar to what is described in the above-cited publication US 4,484,675.

The speeds of planing lines have been constantly increasing, whereby traditional dispensing and overturning mechanisms do not have a capacity of delivering pieces of sawn timber to new planes at a sufficiently high-speed rate. This is true especially in further processing, as the pieces to be handled are short. This has created a need to develop a simple, high-speed and functionally reliable overturning device, which has a capacity of increasing production rate.

The above-described problem is overcome by a mechanism of the invention. The mechanism is characterized by what is set forth in the appended claims.

The mechanism will now be described more specifically with reference to an example and figures, in which
fig. 1 shows an overturning mechanism for a piece of sawn timber at the moment the piece of sawn timber arrives at a flip-over site,
fig. 2 shows an overturning mechanism for a piece of sawn timber at the moment the piece of sawn timber is turned over, and
fig. 3 shows an overturning mechanism for a piece of sawn timber when overturning of the piece of sawn timber is denied.

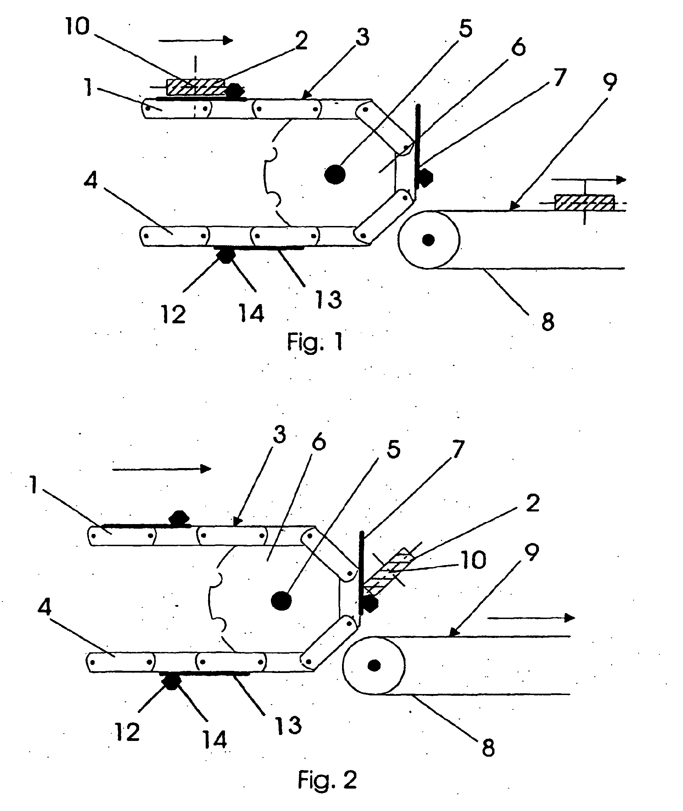

The mechanism of fig. 1 comprises a first side conveyor 1 and speeding conveyor (not shown in figures) for speeding up the piece of sawn timber 2 to the trailing edge of a flight 7 and which first side conveyor is carrying the same to a flip-over site upon its transfer top. This first side conveyor 1 is preferably a flight conveyor, comprising a conveyor chain 4 which extends around a sprocket 6 mounted on a drive shaft 5, as well as a number of flights 7. Flight conveyor's flight 7, which is a stopper 12 situated in the leading edge of the flat bar iron 13 relative to the flight conveyor's transfer direction (shown by arrow), is relatively low and the upper corner 14 closer to the sawn timber 2 is rounded or beveled so that it is not restricting the overturning of the sawn timber. The stopper 12 has to be adequate to stop the sawn timber 2 moved by speeding conveyor. The length of the flat bar iron 13 has to be greater than the half of the maximum width of the sawn timber 2. The width of the flat bar iron 13 is advantageously nearly the same as the width of the loop of the outer conveyor chain 4. The flat bar iron 13 is connected to the conveyor chain's 4 side plates advantageously by welding. The speeding conveyor is a conventional type of block chain- or belt conveyor which has its top surface slightly higher than the flight conveyor's top surface at the speeding stage. It is advantageously to locate the speeding conveyor as close as possible to the flip-over site of the sawn timber 2 to secure that the sawn timber is kept close to the stopper 12 and on top of the flat bar iron 13. In order to deliver the piece of sawn timber 2 away from the flip-over site, the mechanism comprises a second side conveyor 8. A second transfer top 9 defined by the second side conveyor 8 lies at a substantially lower level than the first transfer top 3 defined by the first side conveyor 1. In this context, the terms first and second transfer top are used in reference to those planes 3 and 9 defined by the side conveyors 1 and 8, along which the pieces of sawn timber 2 are carried by the side conveyors 1 and 8. As shown in fig. 1, the piece of sawn timber 2 lies upon the first transfer top 3 and, carried by the first side conveyor 1, is approaching the sprocket 6 mounted on the first side conveyor's drive shaft 5, the flight conveyor being adapted to run around said sprocket.

The second side conveyor 8 has its second transfer top 9 so arranged with respect to the sprocket 6 mounted on the first side conveyor's 1 drive shaft 5 that, as the flight conveyor proceeds around the sprocket, the piece of sawn timber 2 falls under gravity onto the substantially lower-level second side conveyor's 8 second transfer top 9 in such a way that the piece of sawn timber 2 flips over at the same time through 180° around its longitudinal axis 10. The overturning of the piece of sawn timber 2 occurs without any extra equipment as the piece of sawn timber effects its flip-over movement around the longitudinal axis 10 of the piece of sawn timber automatically as the conveyor 1 proceeds around the sprocket 6.

The first side conveyor 1 has its flight 7 enhancing and ensuring the flip-over as shown in fig. 2, while the piece of sawn timber passes from the first side conveyor 1 onto the second side conveyor 8. It is beneficial that the second side conveyor's 8 second transfer top 9 be arranged almost coplanar with the drive shaft 5 of the first side conveyor's 1 sprocket 6, as shown in figs. 1-3. This enables a flip-over of the piece of sawn timber 2 through 180°, yet it is not forced to unnecessarily high fall onto the top of the second side conveyor 8. The transfer of the piece of sawn timber 2 from the first side conveyor 1 onto the second side conveyor 8 occurs under gravity as the flight conveyor's flight 7 only ensures the flip-over motion.

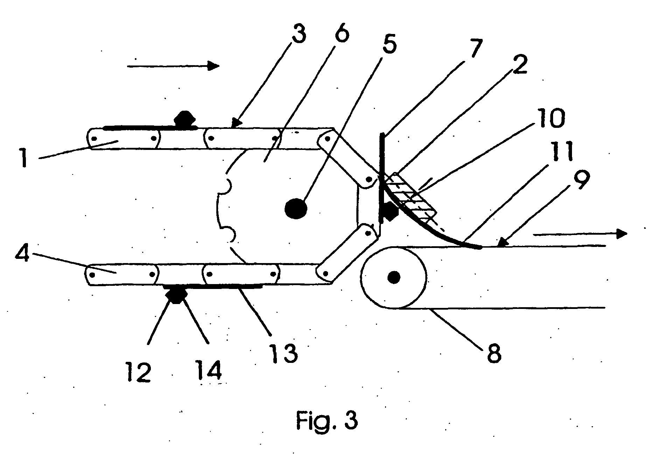

Fig. 3 shows an arrangement for effecting a passage of the piece of sawn timber 2 from the first side conveyor 1 onto the second side conveyor 8 without turning the piece of sawn timber through 180° about its longitudinal axis 10. In association with the first side conveyor 1 is fitted for example a pneumatically operated chute 11, which can be set in a position as shown in fig. 3 for denying a flip-over of the piece of sawn timber 2. The piece of sawn timber 2 slides down the chute 11, assisted by the flight conveyor's flight 7, and arrives upon the second side conveyor 8 the same side up as it was on the first side conveyor 1. As required, the chute 11 can be set in the position shown in fig. 3 when it is desirable to retain the position of the piece of sawn timber 2, or it can be lowered down in order to effect a flip-over of the piece of sawn timber around its longitudinal axis 10 through 180°.

All functions involved in a flip-over of the piece of sawn timber 2 are implemented by the timber-delivering first side conveyor's 1 drive shaft 5, whereby the flip-over can be effected without any extra equipment, such as a separate star wheel or the like. The functions of the flip-over inhibiting chute 11 are also concentrated on the first side conveyor's 1 same drive shaft 5. Thus, it has been possible to arrange all functions to be performed by the first side conveyor's 1 one and the same drive shaft 5, which is in any case needed in a side conveyor even for advancing the pieces of sawn timber 2. This simplifies essentially the necessary arrangements for flipping over the piece of sawn timber 2.

## Claims

1. A mechanism for overturning a piece of sawn timber (2) through 180° around its longitudinal axis (10), said mechanism comprising a first side conveyor (1), provided with a drive shaft (5) and a sprocket (6) mounted thereon, said first side conveyor (1) defining a first transfer top (3) as well as a second side conveyor (8) for defining a second transfer top (9), the second transfer top (9) defined by the second side conveyor (8) is arranged coplanar with or below the drive shaft (5) of the first side conveyor's (1) sprocket (6), **characterized in that** the first side conveyor (1) comprises at least one flight (7) and it is arranged together with a speeding conveyor, said flight comprising a flat iron bar (13) connected to the conveyor chain at its leading edge, relative to the transfer direction of said first side conveyor, and a stopper (12) positioned at the leading edge of said flat iron bar, said speeding conveyor able to move the sawn timber close to the stopper, so that when the conveyor chain proceeds around the sprocket (6) mounted on,a drive shaft (5) the at least one flight (7) makes the flip-over more effective.

2. A mechanism as set forth in claim 1, **characterized in that** the first side conveyor (1) comprises a flight conveyor.

3. A mechanism as set forth in claim 1, **characterized in that** the upper corner (14) of the stopper (12) that is closer to the sawn timber (2) is rounded or beveled.

4. A mechanism as set forth in claim 2, **characterized in that** it further comprises a hydraulic or pneumatically operated chute (11) denying a flip-over of the piece of sawn timber (2).

## Patentansprüche

1. Vorrichtung zum Wenden eines Stücks Schnittholz (2) um 180° um seine Längsachse (10), wobei die Vorrichtung umfasst: ein erstes Seitenfördermittel (1), versehen mit einer Antriebswelle (5) und einem daran angebrachten Kettenrad (6), wobei das erste Seitenfördermittel (1) eine erste Transferoberseite (3) definiert, sowie ein zweites Seitenfördermittel (8) zum Definieren einer zweiten Transferoberseite (9), wobei die durch das zweite Seitenfördermittel (8) definierte zweite Transferoberseite (9) koplanar mit oder unter der Antriebswelle (5) des Kettenrads (6) des ersten Seitenfördermittels (1) angeordnet ist, **dadurch gekennzeichnet, dass** das erste Seitenfördermittel (1) wenigstens einen Mitnehmer (7) umfasst, angeordnet zusammen mit einem Beschleunigungsfördermittel, wobei der Mitnehmer eine flache Eisenstange (13) umfasst, welche bezüglich der Transferrichtung des ersten Seitenfördermittels an ihrer Führungskante mit der Förderkette verbunden ist, und einen an der Führungskante der Eisenstange positionierten Anschlag (12), wobei das Beschleunigungsfördermittel in der Lage ist, das Schnittholz zu dem Anschlag zu bewegen, sodass der wenigstens eine Mitnehmer (7) das Überkippen wirksamer macht, wenn sich die Förderkette um das an einer Antriebswelle (5) angebrachte Kettenrad bewegt.

2. Vorrichtung nach Anspruch 1, **dadurch gekennzeichnet, dass** das erste Seitenfördermittel (1) eine Mitnehmerkette umfasst.

3. Vorrichtung nach Anspruch 1, **dadurch gekennzeichnet, dass** die Oberkante (14) des Anschlags (12), die näher an dem Schnittholz (2) ist, abgerundet oder abgeschrägt ist.

4. Vorrichtung nach Anspruch 2, **dadurch gekennzeichnet, dass** sie ferner eine hydraulisch oder pneumatisch betriebene Rutsche (11) umfasst, die ein Überkippen des Schnittholzstücks (2) verhindert.

## Revendications

1. Dispositif destiné à retourner une pièce de bois de sciage (2) de 180° sur son axe longitudinal (10), ledit dispositif comprenant un premier transporteur à décharge latérale (1) muni d'un arbre moteur (5) et d'un pignon (6) monté sur celui-ci, ledit premier transporteur à décharge latérale (1) définissant une première surface de transfert (3), ainsi qu'un second transporteur à décharge latérale (8) destiné à définir une seconde surface de transfert (9), la seconde surface de transfert (9) définie par le second transporteur à décharge latérale (8) étant disposée de manière coplanaire avec ou en dessous de l'arbre moteur (5) du pignon (6) du premier transporteur à décharge latérale (1), **caractérisé en ce que** le premier transporteur à décharge latérale (1) comprend au moins une raclette (7) et **en ce qu'**il est agencé conjointement avec un transporteur d'accélération, ladite raclette comprenant une barre de fer plate (13) reliée à la chaîne de transporteur au niveau de son bord d'attaque, par rapport au sens de déplacement dudit premier transporteur à décharge latérale, et un butoir (12) positionné au niveau du bord d'attaque de ladite barre de fer, ledit transporteur d'accélération pouvant déplacer le bois de sciage à proximité du butoir, de sorte que lorsque -la chaîne de transporteur avance autour du pignon (6) monté sur un arbre moteur (5), l'au moins une raclette (7) rende le retournement plus efficace.

2. Dispositif selon la revendication 1, **caractérisé en ce que** le premier transporteur à décharge latérale (1) comprend un transporteur à raclettes.

3. Dispositif selon la revendication 1, **caractérisé en ce que** le coin supérieur (14) du butoir (12) qui est le plus proche du bois de sciage (2) est arrondi ou biseauté.

4. Dispositif selon la revendication 2, **caractérisé en ce qu'**il comprend en outre un descenseur hydraulique ou pneumatique (11) empêchant un retournement de la pièce de bois de sciage (2).
